(19) **Europäisches Patentamt**

**European Patent Office**

**Office européen des brevets**

(11) **EP 1 059 527 A2**

(12) **EUROPÄISCHE PATENTANMELDUNG**

(43) Veröffentlichungstag:
13.12.2000 Patentblatt 2000/50

(51) Int. Cl.[7]: **G01N 27/411**

(21) Anmeldenummer: **00111620.1**

(22) Anmeldetag: **31.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **09.06.1999 DE 19926331**

(71) Anmelder: **Thyssen Krupp Stahl AG**
**40211 Düsseldorf (DE)**

(72) Erfinder:
• **Nazikkol, Cetin, Dr.rer.nat., Dipl.-Chem.**
**47169 Duisburg (DE)**
• **Waldörfner, Karl-Heinz**
**47167 Duisburg (DE)**

• **Wienströer, Stefan, Dr.rer.nat., Dipl.-Chem.**
**48145 Münster (DE)**
• **Wiemhöfer, Hans-Dieter,Prof.Dr.rer.nat.,Dipl.-Chem**
**48161 Münster (DE)**
• **Bremes, Hans-Gerd, Dipl.-Chem.**
**59075 Hamm (DE)**
• **Mittelstädt, Horst, Dr.rer.nat., Dipl.-Chem.**
**44892 Bochum (DE)**

(74) Vertreter:
**Knauf, Rudolf, Dipl.-Ing.**
**Cohausz & Florack,**
**Kanzlerstrasse 8a**
**40472 Düsseldorf (DE)**

(54) **Prüfverfahren für das Verhalten von Wasserstoff in einer Metallprobe sowie Messapparatur zur Durchführung des Prüfverfahrens**

(57)    Die Erfindung bezieht sich auf ein Verfahren und eine Apparatur zur Ermittlung des Wasserstoffverhaltens in einer Metallprobe (6). Über das Wasserstoffverhalten läßt sich eine Aussage über bestimmte Eigenschaften der Metallprobe (6), zum Beispiel Emaillierfähigkeit, machen. Ermittelt wird das Verhalten von Wasserstoff in der Metallprobe (6) dadurch, daß über mindestens einen einseitig an der Metallprobe (6) angeordneten protonenleitenden Festelektrolyten (5) eine Wechselspannung angelegt wird, wobei die Metallprobe (6) einschließlich des Festelektrolyten (5) einer wasserstoffhaltigen Atmosphäre ausgesetzt wird. Bei Veränderung der Frequenz der Wechselspannung ergibt sich für eine bestimmte Frequenz ein kleinster Phasenwinkel zwischen der angelegten Spannung und dem Strom, der durch die Metallprobe fließt. Diese Frequenz ist eine Kenngröße für die Bestimmung der Laufzeit des Wasserstoffs durch die Metallprobe (6).

Fig. 1

**Beschreibung**

Über das Verhalten von Wasserstoff in einer Metallprobe ist es möglich, Eigenschaften der Metallprobe festzustellen. So ist es bekannt, mittels eines bestimmten Prüfverfahrens für das Verhalten von Wasserstoff in Feinblechen deren Eignung für das Emaillieren festzustellen. Zu den am meisten gefürchteten Emaillierfehlern zählen sogenannte Fischschuppen, weil sie nicht sofort erkennbar sind, sondern erst längere Zeit nach der Emaillierung in Erscheinung treten. Das für solche Fehler anerkannte Prüfverfahren war früher in der deutschen Norm DIN 1613-3 von 1987 und ist heute in der europäischen Norm EN 10209 von Mai 1996 festgelegt. Bei diesem Verfahren wird die Vorderseite der Metallprobe mit einem wäßrigen Elektrolyten in Kontakt gebracht. Der durch die Metallprobe diffundierende Wasserstoff wird auf der Rückseite der Metallprobe gesammelt. Mit einer vorgegebenen Formel wird eine Kenngröße für die Wasserstoffdiffusion ermittelt, bei der die Durchtrittszeit für den Wasserstoff durch die Probe unter Berücksichtigung der Dicke der Probe maßgebend ist. Diese Kenngröße ist dann ein Beurteilungskriterium für die Fischschuppenanfälligkeit der Metallprobe.

Es wurde gefunden, daß ein solches Verfahren bei herkömmlichen, unlegierten Emaillierstahlgüten eine zufriedenstellende Aussage über deren Fischschuppenanfälligkeit liefert, nicht jedoch für mit Bor oder Titan legierte Stahlqualitäten, wie die IF-Stahlgüten, die sich insbesondere für Tiefziehzwecke gut eignen. Hinzu kommt, daß das bekannte Verfahren nur mit großem Aufwand durchzuführen ist, keine befriedigende Reproduzierbarkeit gewährleistet und nur bei Raumtemperatur funktioniert.

Demgegenüber wird bei einem anderen bekannten Verfahren („Development of ceramic sensor for the prediction of hydrogene ..." von R. Nishimura, K. Toba and K. Yamakawa, Copyright 1966, Corrosion Science Limited) zur Messung der Wasserstoffdiffusion durch eine Metallprobe ein protonenleitender Festelektrolyt eingesetzt. Dazu ist der Festelektrolyt über einen Distanzring auf der Rückseite der Metallprobe angeordnet. Wird die Konzentration des Wasserstoffs auf der Vorderseite der Metallprobe schlagartig von 1% auf 100% erhöht, dann tritt zeitverzögert in den von dem Distanzring und dem Festelektrolyten gebildeten Sammelraum Wasserstoff ein. Um die von der Zeit abhängige Wasserstoffdiffusion zu messen, liegt am Festelektrolyten eine Spannung an. Die schlagartige Änderung der Konzentration des Wasserstoffs auf der Vorderseite der Probe macht sich zeitverzögert in einem starken Stromanstieg in der an der Rückseite anliegenden Spannungsquelle bemerkbar. Eine Schwierigkeit bei diesem Verfahren besteht darin, den Zeitpunkt der schlagartigen Änderung der Wasserstoffkonzentration an der Vorderseite der Metallprobe zu bestimmen beziehungsweise die Totzeiten für den Wasserstoffeintritt in die Probe möglichst klein zu halten. Diese Schwierigkeit wirkt sich nachteilig auf die Meßgenauigkeit bezüglich der Durchtrittszeit aus.

Der Erfindung liegt die Aufgabe zugrunde, ein Meßverfahren und eine Meßapparatur zum Prüfen des Verhaltens von Wasser in Metallproben zu schaffen, das universell anwendbar ist, exaktere Meßergebnisse als bekannte Verfahren liefert, einfach zu handhaben ist und auch bei erhöhten Temperaturen auch oberhalb von 100° C anwendbar ist.

Das erfindungsgemäße Prüfverfahren für das Verhalten von Wasserstoff in einer Metallprobe ist durch folgende Merkmale gekennzeichnet:

a) An die mindestens auf einer Seite mit einem protonenleitenden Festelektrolyten versehene Metallprobe wird unter Einschluß des Festelektrolyten eine Wechselspannung angelegt.

b) Gleichzeitig wird mindestens die eine Seite mit dem Festelektrolyten mit Wasserstoff beaufschlagt.

c) Während die Frequenz der Wechselspannung über ein bestimmtes Intervall stetig verändert wird, wird aus der Beziehung der anliegenden Spannung und des durch die Metallprobe fließenden Stroms als Kenngröße für die Bestimmung der Laufzeit des Wasserstoffs durch die Metallprobe die Frequenz ermittelt, bei der die Phasenverschiebung von Spannung und Strom am kleinsten ist.

Die für die Durchführung des Verfahrens geeignete Meßapparatur weist einen Wechselspannungsgenerator auf, der an zwei Seiten der mindestens an einer dieser Seiten mit einem Festelektrolyten versehenen Metallprobe über Elektroden angeschlossen ist und dessen Wechselspannungsfrequenz über ein bestimmtes Intervall veränderbar ist, die ferner Mittel zur Beaufschlagung mindestens der mit dem Festelektrolyten bestückten Seite der Metallprobe mit Wasserstoff und schließlich eine Auswerteeinheit für die frequenzabhängige Beziehung der an der Metallprobe anliegenden Spannung und des durch die Metallprobe fließenden Stroms umfaßt, die aus der Frequenz, bei der die kleinste Phasenverschiebung von Spannung und Strom vorliegt, eine Kenngröße für die Laufzeit des Wasserstoffs durch die Metallprobe ermittelt.

Das erfindungsgemäße Prüfverfahren und die erfindungsgemäße Meßapparatur basieren auf der Erkenntnis, daß eine charakteristische Größe für das Verhalten von Wasserstoff in mit Wasserstoff beaufschlagten Metallproben, an denen eine Wechselspannung anliegt, die Frequenz $\nu_0$ mit der kleinsten Phasenverschiebung von Spannung und Strom ist. Diese Frequenz ist nicht nur über den kleinsten Phasenwinkel identifizierbar, sondern auch über die frequenzabhängige Impedanzkurve für die Metallprobe, die hier einen Wendepunkt hat. Diese Kriterien entsprechen einander bzw. stehen in Beziehung zueinander. Dieses eigenartige Verhalten der Metallprobe hinsichtlich der Diffusion des Wasserstoffs in die Metallprobe unter dem Einfluß der Wechselspannung mit sich ändernder Frequenz läßt sich vielleicht damit erklären, daß der Transport des in die Probe eindiffundierten Wasserstoffs innerhalb der Probe von dem Konzentrationsgefälle an den Seiten der Metallprobe abhängt, wo die Wechselspannung anliegt. Da die Wasserstoffkonzentration ihrerseits direkt von der anliegenden Wechselspannung abhängt, die sich periodisch ändert, ändert sich auch das Konzentrationsgefälle innerhalb der Metallprobe, welches die Triebkraft für die Diffusion darstellt. Das wirkt sich so aus, daß sich eine Diffusionsfront in der Probe hin und herbewegt. Der Weg, den diese Diffusionsfront in die eine Richtung zurücklegt, ist abhängig von der Frequenz der anliegenden Spannung. Bei hohen Frequenzen ist dieser Weg klein. Mit abnehmender Frequenz wird er immer größer. Bei einer Metallprobe, in die von gegenüberliegenden Seiten Wasserstoff diffundieren kann, wurde gefunden, daß es eine bestimmte Frequenz gibt, bei der die Diffusionsfront auf ihrem Hinweg von der einen Probenseite ausgehend gerade die Hälfte der Probendicke durchquert, bevor sie dort zum Stehen kommt und ihre Bewegungsrichtung wieder umkehrt, um auf dem Rückweg wieder die eingangsseitige Probenseite zu erreichen, dort wieder zum Stehen kommt und wieder umkehrt. Das ist die Frequenz $\nu_0$, bei der der Phasenwinkel von Strom und Spannung ein Minimum hat beziehungsweise die frequenzabhängige Impedanzkurve einen Wendepunkt hat. Die Zeit $t_0$, die bei beidseitig eindiffundierendem Wasserstoff die Diffusionsfront für den Durchtritt durch die gesamte Probe benötigen würde, ergibt sich aus dem Kehrwert dieser Frequenz $\nu_0$. Dieses deshalb, weil bei auf beiden Seiten eindiffundierendem Wasserstoff das Minimum des Phasenwinkels bei einer Frequenz liegt, bei der die Diffusionsfront in der ersten Halbwelle der Wechselspannung auf ihrem Hinweg die Hälfte der Probendicke und in der zweiten Hälfte der Halbwelle auf ihrem Rückweg diese Hälfte nochmals durchquert.

Sofern aber der Wasserstoff nur einseitig in die Metallprobe eindiffundieren kann, ergibt sich die Wasserstoffdurchtrittszeit aus dem halben Kehrwert dieser Frequenz, weil der kleinste Phasenwinkel sich erst bei einer Frequenz ergibt, bei der die Diffusionsfront von der einen Seite bis zur anderen Seite und zurück gewandert ist.

Ist die Durchtrittszeit $t_o$ bekannt, dann läßt sich bei bekannter Probendicke x der Diffusionskoeffizient D für Wasserstoff mit der Beziehung $D = x^2/2t_o$ berechnen. Da der Diffusionskoeffizient D eine temperaturabhängige Größe ist, gilt dieser nur für die Temperatur, bei der die Durchtrittszeit $t_o$ bestimmt wurde. Mit Hilfe der sogenannten Nernst-Einstein-Beziehung kann bei bekanntem Diffusionskoeffizienten D auch die Löslichkeit $C_h$ für Wasserstoff in der Metallprobe berechnet werden:

$$C_{h,\text{stahl}} = (x\,R\,T)/(\triangle Z\,D\,A\,F^2)$$

mit x = Probendicke, R = allgemeine Gaskonstante, T = Temperatur, $\triangle Z$ = Impedanzänderung, D = Diffusionskoeffizient, A = Elektrodenoberfläche und F = Farraday-Konstante.

Die Beaufschlagung der Metallprobe mit Wasserstoff läßt sich sowohl mit einem wasserstoffhaltigen Gas als auch mit einer wasserstoffhaltigen Elektrolytlösung durchführen. Für Temperaturen oberhalb des Siedepunktes eignet sich allerdings nur ein wasserstoffhaltiges Gas.

Am einfachsten läßt sich die Messung durchführen, wenn die Wasserstoffkonzentration konstant gehalten wird. Für die Messung ist es auch am einfachsten, wenn die Amplitude der Wechselspannung konstant gehalten wird.

Die Veränderung der Frequenz sollte aus Gründen einer möglichst kurzen Meßzeit ausgehend von hohen Frequenzen zu niedrigen Frequenzen erfolgen.

Das Frequenzintervall für die Messung liegt vorzugsweise im Bereich der erwarteten reziproken Durchtrittszeit und sollte mindestens eine Dekade zu höheren und tieferen Frequenzen umfassen, wobei die höheren Frequenzen die Meßzeit nicht wesentlich erhöhen.

Bei der Meßapparatur sollte mindestens die dem Festelektrolyten abgewandte Seite der Elektrode mit einem wasserstoffhaltigen Gas oder einer wasserstoffhaltigen Elektrolytlösung in einem mit konstanter Wasserstoffkonzentration gefüllten Raum untergebracht sein. Die konstante Wasserstoffkonzentration läßt sich auf einfache Weise dadurch erreichen, daß der Raum an einer Zu- und Ableitung für das wasserstoffhaltige Gas oder den wasserstoffhaltigen Elektrolyten angeschlossen ist. Auf diese Art und Weise kann der Raum andauernd mit frischem Gas oder einem frischen Elektrolyten der gewünschten Wasserstoffkonzentration durchspült werden.

Da die Wasserstoffdiffusion temperaturabhängig ist, ist nach einer Ausgestaltung der Erfindung eine geregelte Heizeinrichtung für den Festelektrolyten und/oder die Metallprobe vorgesehen. Optional kann auch das Gas beheizt werden.

Die freien Seiten der Metallprobe und/oder der wasserstoffhaltige Elektrolyt können in einem weiteren Raum eingeschlossen sein, der mit einem wasserstoffhaltigen Gas mit einer höheren Wasserstoffkonzentration als der Raum beziehungsweise die Räume mit den Elektroden gefüllt ist. Dadurch wird erreicht, daß vor Beginn der Messung ein Gleichgewichtszustand des in der Metallprobe in gelöster Form vorliegenden Wasserstoffs schnell erreicht wird.

Die Kontaktierung der Metallprobe mit dem Generator für die Wechselspannung auf beiden Seiten kann entweder einen symmetrischen oder asymmetrischen Aufbau haben. Dies gilt für alle folgenden weiteren Ausgestaltungen.

Nach einer dieser Ausgestaltungen kann die Kontaktfläche des Festelektrolyten an der Metallprobe um ein Vielfaches kleiner sein als die dem Festelektrolyten zugewandte Oberfläche der Metallprobe. Vorzugsweise ist das Verhältnis Radius der Kontaktfläche zur Dicke der Metallprobe ☐ 0,2. Solche Mikrokontakte verkürzen die Meßzeit, die bis zur Messung der gesuchten Frequenz für den kleinsten Phasenwinkel benötigt wird im Vergleich zu großflächigen Kontakten. Diese Mikrokontakte haben allerdings den Nachteil, daß die Meßgenauigkeit stark davon abhängt, wie genau die Größe der Kontaktfläche des Mikrokontaktes bekannt ist. Bei großflächigen Kontakten ist dies weniger kritisch.

Nach einer weiteren Ausgestaltung der Erfindung ist zwischen dem Festelektrolyten und der Metallprobe eine Katalysatorschicht vorgesehen. Diese Katalysatorschicht hat die Aufgabe, den Übergangswiderstand für die Protonen beim Übergang vom Festelektrolyten in die Metallprobe zu verringern. Dadurch wird die Gefahr einer Rekombination der Wasserstoffprotonen zu molekularem Wasserstoff im Bereich der Grenzschicht zwischen Festelektrolyt und Metallprobe vermieden. Der Wasserstoff kann dann in den Gasraum diffundieren.

Für die Ausbildung der Elektroden gibt es mehrere Möglichkeiten. Vorzugsweise bestehen sie aus einem porösen Material, das keinen gelösten Wasserstoff aufnimmt. Insbesondere kann das Material als Katalysator bei der Umsetzung von molekularem Wasserstoff in atomaren Wasserstoff wirken. An der Grenzfläche Festelektrolyt/poröse Elektrode ergibt sich dann eine Dreiphasengrenze, wo der molekular vorliegende Wasserstoff in atomaren Wasserstoff umgewandelt wird, der unter Freisetzen eines Elektrons als Proton über den protonenleitenden Festelektrolyten in die Metallprobe gelangt. Als Katalysatormaterial eignet sich insbesondere Platin.

Alternativ kann die Elektrode auch aus einem nicht porösen Material bestehen, in dem gelöster atomarer Wasserstoff vorliegt, der dann an der Grenzfläche Elektrode/Festelektrolyt unter Abgabe eines Elektrons zu Protonen umgewandelt wird und in die Metallprobe diffundiert. Solche Elektroden brauchen nicht porös zu sein.

In jedem Fall wird aus dem mit Wasserstoff gefüllten Raum an der Elektrode der durch die abfließenden Protonen entstandene Wasserstoffverlust wieder ausgeglichen.

Im folgenden wird die Erfindung anhand einer Ausführungsbeispiele darstellenden Zeichnung näher erläutert. Im einzelnen zeigen:

Figur 1 eine Meßapparatur mit einem bezüglich der zu untersuchenden Metallprobe unsymmetrischen Aufbau,

Figur 2 eine Meßapparatur mit einem bezüglich der zu untersuchenden Metallprobe symmetrischen Aufbau,

Figur 3 eine Meßapparatur mit einem bezüglich der zu untersuchenden Metallprobe unsymmetrischen Aufbau in einer zu Figur 1 abgewandelten Ausführung und

Figur 4 ein Bode-Diagramm für den Phasenwinkel von Spannung und Strom an bzw. in der Metallprobe sowie deren Impedanz beim Messen mit einer Meßapparatur der Figuren 1 bis 3.

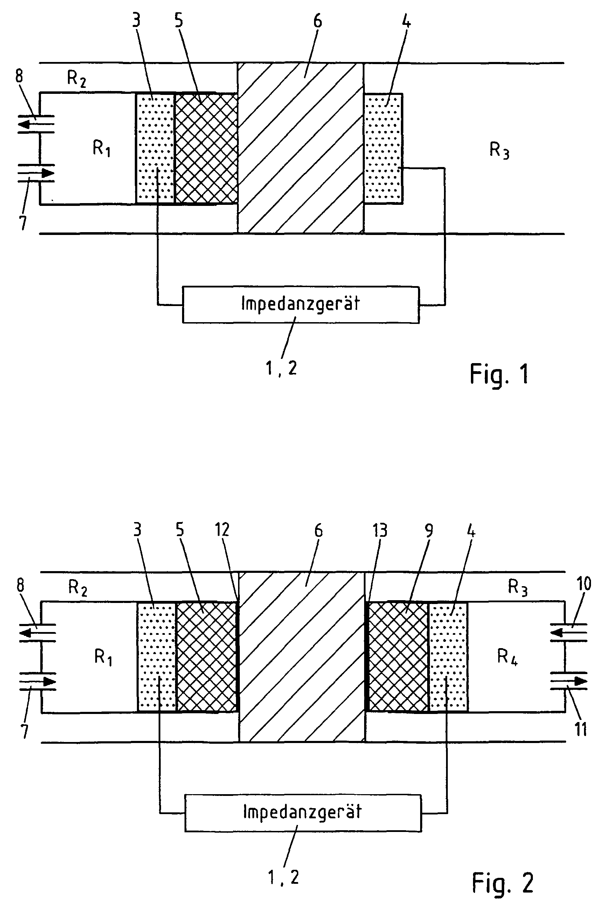

Die in Figur 1 dargestellte Meßapparatur umfaßt ein aus einem Wechselspannungsgenerator 1 und einer Auswerteeinheit 2 bestehendes Impedanzgerät, zwei Elektroden 3, 4, von denen die eine Elektrode 3 an der Außenseite eines Festelektrolyten 5 flächig anliegt, der mit seiner Innenseite an einer Teilfläche einer Seite einer zu untersuchenden Metallprobe 6 anliegt. An einer Teilfläche der anderen Seite der Metallprobe 6 liegt die andere Elektrode 4 an. Die freie Seite der Elektrode 3 liegt in einem ersten Raum $R_1$ mit einer Zuleitung 7 und einer Ableitung 8. Über die Zu- und Ableitung 7,8 wird der Raum $R_1$ mit einem wasserstoffhaltigen Gas oder einer Elektrolytlösung durchspült. Dadurch ist es möglich, in diesem Raum $R_1$ die Konzentration und ggf. die Temperatur des wasserstoffhaltigen Gases oder Elektolyten konstant zu halten. Eine konstante Temperatur läßt sich mit geringem apparativen Aufwand, z.B. mit einer geregelten Heizeinrichtung, verwirklichen. Die von der Elektrode 4 freigelassenen Flächen der Metallprobe 6 liegen in einem dritten Raum $R_3$, der mit einem wasserstoffhaltigen Gas höherer Konzentration als der Raum $R_1$ gefüllt ist. Die Räume $R_2$ und $R_3$ können miteinander zu einem Raum zusammengeschlossen sein.

Während beim Ausführungsbeispiel der Figur 1 nur auf einer Seite der Metallprobe 6 ein Festelektrolyt 5 vorgesehen ist, ist das Ausführungsbeispiel der Figur 2 bezüglich der Metallprobe 6 symmetrisch aufgebaut. Das heißt, daß zwischen der Elektrode 4 und der Metallprobe 6 ein weiterer Festelektrolyt 9 angeordnet ist und die Elektrode 4 mit ihrer freiliegenden Seite in einem vierten Raum $R_4$ liegt, der über eine Zuleitung 10 und eine Ableitung 11 mit einem wasserstoffhaltigen Gas oder Elektrolyten durchspült wird. Die Wasserstoffkonzentration und ggf. die Temperatur in diesem Raum $R_4$ wird vorzugsweise wie die im Raum $R_1$ konstant gehalten. Die von dem Festelektrolyten 5 freigelassenen Flächen der Metallprobe 6 liegen in einem zweiten Raum $R_2$, der mit wasserstoffhaltigem Gas höherer Konzentration als der Raum $R_1$ gefüllt ist.

Ein weiterer Unterschied zum Ausführungsbeispiel der Figur 1 besteht darin, daß zwischen der Metallprobe 6 und dem jeweiligen Festelektrolyten 5, 9 eine Katalysatorschicht 12, 13 angeordnet ist.

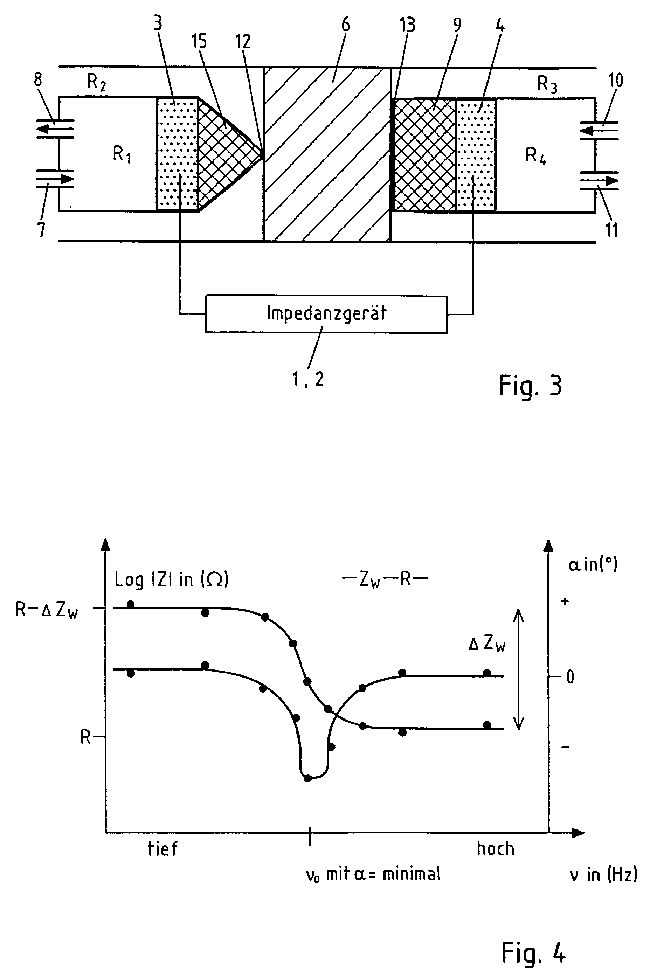

Das Ausführungsbeispiel der Figur 3 unterscheidet sich von dem der Figur 2 darin, daß der Festelektrolyt 15 als Mikrokontakt ausgebildet ist.

Es versteht sich, daß es neben den beschriebenen drei Ausführungsbeispielen noch eine Reihe von Variationen bezüglich der Kontaktierungen und der Form der Elektroden gibt.

Die Elektroden 3, 4 bestehen entweder aus einem porösen Material, das keinen gelösten Wasserstoff aufnimmt, aber als Katalysator bei der Umsetzung von molekularem Wasserstoff in atomaren Wasserstoff wirkt, oder aus einem Material, in dem Wasserstoff in gelöster Form vorliegt. Als Katalysator eignet sich zum Beispiel Platin. Der Wirkungsmechanismus an der Grenzfläche Elektrode/Festelektrolyt hängt von dem für die Elektroden 3, 4 gewählten Werkstoff ab. Bei einem porösen Werkstoff, der keinen gelösten Wasserstoff aufnimmt, ergeben sich an der Grenzfläche drei Phasen, und zwar aus dem katalytisch wirkenden Material der Elektrode 3, 4, dem protonenleitenden Festelektrolyten 5, 9, 15 und dem Gas bzw. Elektrolyten mit dem darin molekular vorliegenden Wasserstoff, der hier in atomaren Wasserstoff umgesetzt wird und unter Abgabe eines Elektrons als Proton in den Festelektrolyten 5, 9, 15 diffundiert.

Im anderen Fall mit einer Elektrode 3, 4 aus einem nicht porösen Werkstoff, in dem dafür aber Wasserstoff in gelöster Form vorliegt, wandern die Protonen der Wasserstoffatome unter Freisetzen eines Elektrons in den Festelektrolyten ab. Der damit verbundene Verlust an atomarem gelösten Wasserstoff in den Elektroden 3, 4 wird ausgeglichen durch aus den Räumen $R_1$, $R_4$ aufgenommenen Wasserstoff.

Die zwischen den Festelektrolyten 5, 9, 15 und der Metallprobe 6 vorgesehenen Katalysatoren 12, 13 haben die Aufgabe, den Übergangswiderstand für die Protonen beim Übergang vom Festelektrolyten 5, 9, 15 in die Metallprobe zu verringern, um einer Rekombination der übergehenden Protonen zu molekularem Wasserstoff an dieser Grenzschicht entgegenzuwirken.

Das Prüfverfahren unter Verwendung der beschriebenen Meßapparatur wir folgendermaßen durchgeführt:

Bevor das eigentliche Prüfverfahren beginnt, werden die äußeren Räume $R_2$, $R_3$ in dem die freien Seiten der Metallprobe 6 liegen, mit einem wasserstoffhaltigen Gas gefüllt. Dadurch soll sich im gesamten Volumen der Metallprobe 6 ein Gleichgewichtszustand für gelösten Wasserstoff einstellen. Das beschleunigt die eigentliche Prüfung der Metallprobe 6 auf das Verhalten von Wasserstoff. Dann werden die Räume $R_1$, $R_4$ mit einem wasserstoffhaltigen Medium, insbesondere Gas, gefüllt. Durch ständiges Zu- und Abführen wird die Konzentration des Wasserstoffs und ggf. die Temperatur in den Räumen $R_1$, $R_4$ konstant gehalten.

Dann wird das Impedanzgerät 1, 2 eingeschaltet und über die Elektroden 3, 4 eine Wechselspannung mit konstanter Amplitude angelegt. Die Frequenz ν dieser Wechselspannung wird von höheren Frequenzen nach niedrigen Frequenzen verändert. Die Veränderung erfolgt stetig, worunter nicht ausschließlich eine lineare Änderung verstanden wird. Infolge der anliegenden Spannung stellt sich an der Grenzschicht Festelektrolyt 5, 9, 15 und Metallprobe 6 ein Konzentrationsgefälle der hier vorliegenden Wasserstoffprotonen ein, die mehr oder weniger tief in Abhängigkeit von der Spannung und von der Frequenz in die Metallprobe 6 abwandern. Wegen der an den Elektroden 3, 4 wechselnden Polarität der anliegenden Wechselspannung legen die von der einen Seite in die Metallprobe 6 eindringenden Protonen eine gewisse Strecke in der Metallprobe 6 zurück und kehren bei geänderter Polarität wieder um. Sie machen also eine oszillierende Bewegung. Bei niedrigen Frequenzen legen sie eine größere Strecke als bei höheren Frequenzen zurück. Sofern von beiden Seiten Protonen in die Metallprobe 6 diffundieren können, ergeben sich bei einer bestimmten Frequenz $ν_o$ für die Kurve der frequenzabhängigen Impedanz Z der Metallprobe ein Wendepunkt und für den Phasenwinkel α von Strom/Spannung ein kleinster Wert. Es wurde gefunden, daß bei einem symmetrischen Aufbau der Meßapparatur dieser Wert erreicht wird, wenn die Protonen von beiden Seiten den halben Weg der Dicke der Metallprobe 6 durchlaufen haben. Das bedeutet, daß der Kehrwert dieser gemessenen Frequenz $ν_0$ die Laufzeit $t_0$ der Protonen ist, die sie für das Durchqueren der Metallprobe brauchen. Bei bekannter Dicke x der Metallprobe 6 lassen sich daraus dann verschiedene Kennwerte, wie Diffusionskoeffizient oder Löslichkeit für Wasserstoff in der Metallprobe ermitteln.

Es versteht sich, daß die Beziehung, daß der Kehrwert der Frequenz gleich der Laufzeit ist, die die Protonen für das Durchqueren der Gesamtdicke der Metallprobe benötigen, vom Aufbau der Meßapparatur abhängt. Bei einem symmetrischen Aufbau der Meßapparatur gemäß Figur 2 ist der Kehrwert gleich der Laufzeit, weil die von einer Seite eindiffundierenden Protonen genau bis zur Mitte und wieder zurück wandern, was der Gesamtdicke der Probe entspricht. Bei dem Ausführungsbeispiel der Figur 1 mit dem unsymmetrischen Aufbau durchwandern die Protonen dagegen in einer Periode die doppelte Strecke (Hinweg + Rückweg). Das bedeutet, daß die Laufzeit für das Durchqueren der Metallprobe gleich dem halben Kehrwert ist.

Beim Ausführungsbeispiel der Figur 3 sind die Verhältnisse wieder anders. Es gilt aber in jedem Fall, daß bezogen auf die spezielle Meßapparatur über den Kehrwert der Frequenz, bei der der Phasenwinkel ein Minimum hat, ein Maß für die Laufzeit von Protonen durch eine Metallprobe gefunden werden kann, über die dann die gesuchten charakteristischen Größen für den Diffusionskoeffizient und die Löslichkeit von Wasserstoff in der Probe bestimmt werden können.

## Patentansprüche

1. Prüfverfahren für das Verhalten von Wasserstoff in einer Metallprobe mit folgenden Merkmalen:

   a) An die mindestens auf einer Seite mit einem protonenleitenden Festelektrolyten versehene Metallprobe wird unter Einschluß des Festelektrolyten eine Wechselspannung angelegt.

   b) Gleichzeitig werden mindestens die Seite mit dem Festelektrolyten und die Probe mit Wasserstoff beaufschlagt.

   c) Während die Frequenz der Wechselspannung über ein bestimmtes Intervall stetig verändert wird, wird aus der Beziehung der anliegenden Spannung und des durch die Metallprobe fließenden Stroms als Kenngröße für die Bestimmung der Laufzeit des Wasserstoffes durch die Metallprobe die Frequenz ermittelt, bei der die Phasenverschiebung von Spannung und Strom am kleinsten ist.

2. Prüfverfahren nach Anspruch 1, **dadurch gekennzeichnet, daß** die Beaufschlagung der der Metallprobe abgewandten Seite mit einem wasserstoffhaltigen Gas oder einer wasserstoffhaltigen Elektrolytlösung erfolgt.

3. Prüfverfahren nach Anspruch 1 oder 2, **dadurch gekennzeichnet, daß** die Wasserstoffkonzentration konstant gehalten wird.

4. Prüfverfahren nach einem der Ansprüche 1 bis 3, **dadurch gekennzeichnet, daß** die Veränderung der Frequenz ausgehend von hohen Frequenzen zu niedrigen Frequenzen erfolgt.

5. Prüfverfahren nach einem der Ansprüche 1 bis 4, **dadurch gekennzeichnet, daß** die Amplitude der Wechselspannung konstant gehalten wird.

6. Prüfverfahren nach einem der Ansprüche 1 bis 5, **dadurch gekennzeichnet, daß** der Festelektrolyt und/oder die Metallprobe auf die gewünschte Meßtemperatur erwärmt werden.

7. Prüfverfahren nach Anspruch 1 oder 2 und einem der Ansprüche 3 bis 6, **dadurch gekennzeichnet, daß** das Gas und/oder der wasserstoffhaltige Elektrolyt erwärmt werden.

8. Meßapparatur für die Ermittlung des Verhaltens von Wasserstoff in einer Metallprobe (6) mit einem Wechselspannungsgenerator (1), der an zwei Seiten der mindestens an einer dieser Seiten mit einem Festelektrolyten (5, 9, 15) versehenen Metallprobe (6) über Elektroden (3, 4) angeschlossen ist und dessen Wechselspannungsfrequenz über ein bestimmtes Intervall veränderbar ist, mit Mitteln ($R_1$, $R_4$) zur Beaufschlagung mindestens der mit dem Festelektrolyten (5, 9, 15) bestückten Seite der Metallprobe (6) mit Wasserstoff und mit einer Auswerteeinheit (2) für die frequenzabhängige Beziehung der an der Metallprobe (6) anliegenden Spannung und des durch die Metallprobe (6) fließenden Stroms, die aus der Frequenz ν, bei der die kleinste Phasenverschiebung α von Spannung und Strom vorliegt, eine Kenngröße für die Laufzeit des Wasserstoffs durch die Metallprobe (6) ermittelt.

9. Meßapparatur nach Anspruch 8, **dadurch gekennzeichnet, daß** mindestens die dem jeweiligen Festelektrolyten (5, 9, 15) abgewandte Seite der Elektrode (3, 4) in einem mit einem wasserstoffhaltigen Gas oder einer wasserstoffhaltigen Elektrolytlösung mit konstanter Wasserstoffkonzentration gefüllten Raum ($R_1$, $R_4$) untergebracht ist.

10. Meßapparatur nach Anspruch 8 oder 9, **dadurch gekennzeichnet, daß** der Raum ($R_1$, $R_4$) an einer Zu- und Ableitung (7, 8, 10, 11) für das wasserstoffhaltige Gas oder den wasserstoffhaltigen Elektrolyten angeschlossen ist.

11. Meßapparatur nach einem der Ansprüche 8 bis 10, **dadurch gekennzeichnet, daß** eine geregelte Heizeinrichtung für den Festelektrolyten und/oder die Metallprobe vorgesehen ist.

12. Meßapparatur nach einem der Ansprüche 8 bis 10, **dadurch gekennzeichnet, daß** eine geregelte Heizeinrichtung für das wasserstoffhaltige Gas oder den Elektrolyten vorgesehen ist.

13. Meßapparatur nach einem der Ansprüche 7 bis 11, **dadurch gekennzeichnet, daß** die freien Seiten der Metallprobe (6) in einem weiteren Raum ($R_2$, $R_3$) eingeschlossen sind, der mit einem wasserstoffhaltigen Gas mit einer höheren wasserstoffkonzentration als in dem anderen Raum beziehungsweise den anderen Räumen ($R_1$, $R_4$) mit den Elektroden (3, 4) gefüllt ist.

14. Meßapparatur nach einem der Ansprüche 7 bis 12, **dadurch gekennzeichnet, daß** zwischen den Festelektrolyten (5, 9, 15) und der Metallprobe (6) ein Katalysator (12, 13) vorgesehen ist.

15. Meßapparatur nach einem der Ansprüche 7 bis 13, **dadurch gekennzeichnet, daß** die Elektroden (3, 4) aus einem porösen Material bestehen, das keinen gelösten Wasserstoff aufnimmt.

16. Meßapparatur nach Anspruch 15,
**dadurch gekennzeichnet, daß** das poröse Material als Katalysator bei der Umsetzung von molekularem Wasserstoff in atomaren Wasserstoff wirkt.

17. Meßapparatur nach Anspruch 16,
**dadurch gekennzeichnet, daß** das Material Platin ist.

18. Meßapparatur nach einem der Ansprüche 7 bis 16,
**dadurch gekennzeichnet, daß** die Kontaktfläche des Festelektrolyten (15) an der der Metallprobe (6) zugewandten Seite um ein Vielfaches kleiner ist als die zugewandte Seite der Metallprobe (6).

19. Meßapparatur nach einem der Ansprüche 7 bis 18,
**dadurch gekennzeichnet, daß** das Verhältnis von Radius der Kontaktfläche zur Dicke der Metallprobe $\leq$ 0,2 ist.

20. Meßapparatur nach einem der Ansprüche 7 bis 19,
**dadurch gekennzeichnet, daß** die Kontaktierung der Metallprobe (6) mit dem Wechselspannungsgenerator (1) auf beiden Seiten gleich aufgebaut und damit symmetrisch ist.

21. Meßapparatur nach einem der Ansprüche 7 bis 20,
**dadurch gekennzeichnet, daß** die Kontaktierung der Metallprobe (6) mit dem Wechselspannungsgenerator (1) einen asymmetrischen Aufbau hat.

Fig. 1

Fig. 2

Fig. 3

Fig. 4